# EUROPÄISCHE PATENTSCHRIFT

(11) **EP 4 218 076 B1**
(45) Veröffentlichungstag und Bekanntmachung des Hinweises auf die Patenterteilung: **07.01.2026**
(21) Anmeldenummer: 21786346.3
(22) Anmeldetag: 24.09.2021
(51) Int. Cl.: H01M 8/248

(54) **BRENNSTOFFZELLENANORDNUNG UND VERFAHREN ZUR HERSTELLUNG EINER BRENNSTOFFZELLENANORDNUNG**
FUEL CELL ASSEMBLY AND METHOD FOR PRODUCING A FUEL CELL ASSEMBLY
AGENCEMENT DE PILES À COMBUSTIBLE ET PROCÉDÉ DE FABRICATION D'UN AGENCEMENT DE PILES À COMBUSTIBLE

(30) Priorität: 25.09.2020 DE 102020212104
(43) Veröffentlichungstag der Anmeldung: 02.08.2023
(73) Patentinhaber: Schaeffler Technologies AG & Co. KG, 91074 Herzogenaurach (DE)
(72) Erfinder: OCHS, Markus, 80687 München (DE); GRANZOW, Stefan, 80687 München (DE)
(74) Vertreter: Schaeffler Technologies
(86) Internationale Anmeldenummer: PCT/EP2021/076330
(87) Internationale Veröffentlichungsnummer: WO 2022/063970

(56) Entgegenhaltungen:
- WO-A1-2016/205139

## Beschreibung

Die vorliegende Erfindung betrifft Verspannmöglichkeiten, um sowohl die schnelle Fertigung und Verspannung eines Stapels gewährleisten zu können als auch die nötige Spannkraft einzustellen und eine notwendige Flexibilität oder Dehnungsrate einer Brennstoffzellenanordnung zu ermöglichen.

Eine Brennstoffzellenanordnung wird im Stand der Technik oft als Brennstoffzellenstapel oder "Stack" bezeichnet und weist in einer Stapelrichtung gestapelt angeordnete Brennstoffzellen auf, die jeweils plattenförmig ausgebildet sind und sich orthogonal zur Stapelrichtung betrachtet jeweils in einer ersten Querrichtung und einer dazu orthogonalen zweiten Querrichtung erstrecken.

Brennstoffzellen weisen jeweils in der Stapelrichtung gestapelt auf:
- eine anodenseitige Bipolar-Halbplatte mit einer Brennstoff-Kanalstruktur zur Führung eines Brennstoffes,
- eine anodenseitige Gasdiffusionslage,
- eine Membran-Elektroden-Einheit, aufweisend eine Elektrolytmembran und in Stapelrichtung beiderseits davon angeordnete Elektrodenschichten, die eine Anode und eine Kathode für eine elektrochemische Reaktion des Brennstoffes mit einem Oxidationsmittel ausbilden,
- eine kathodenseitige Gasdiffusionslage,
- eine kathodenseitige Bipolar-Halbplatte mit einer Oxidationsmittel-Kanalstruktur zur Führung des Oxidationsmittels.

Zum Stand der Technik derartiger Brennstoffzellenstapel sei beispielhaft auf die Veröffentlichungen EP 2 357 698 B1, EP 2 445 045 B1, EP 2 584 635 B1, EP 2 946 431 B1 und EP 3 316 377 A1 verwiesen.

Brennstoffzellenstapeln werden typisch mittels Spannbolzen oder Schrauben und Federelementen mechanisch verspannt. Zudem gibt es Lösungen, die ein (meist metallisches) Band um den Stapel führen, welches dann an Befestigungspunkten an den Endplatten des Stapels befestigt und vorgespannt werden, siehe hierzu z.B. US 2006/093890 (Steinbroner). Eine weitere Verspanneinrichtung mit einem Kompressionsband ist aus der WO 2016/205139 A1 bekannt. Eine ergänzende Lösung ist auf Zahn- oder Keilriemen basierende Verspannungen, die auf mehrere Riemen samt mehrerer Verspann-Einheiten basieren.

Eine Schwachstelle für die Verspannung der Stapel ist die Vielzahl an Spannstellen, bzw. Schrauben und beweglichen Bauteilen, die zur Einstellung der Vorhaltekraft samt Federelementen oder ggf. Spannbändern benötigt werden. Für eine Massenproduktion und der Eingliederung in eine schnelle und produktive Fertigungsanlage sind schnelle Verspann-Prozesse notwendig. Zudem muss die Zahl der Einzelteile, die zur Fertigung und zur Verspannung benötigt werden, möglichst klein gehalten werden.

Um sowohl die schnelle Fertigung und Verspannung eines Stapels gewährleisten zu können als auch die nötige Spannkraft einzustellen und eine notwendige Flexibilität und Dehnungsrate eines Spannbandes zu erhalten, eignen sich Riemenelemente gut.

Die zentrale Verspannung bietet jedoch entscheidende Nachteile was die Umlenkraten oder Radius-Änderung des Riemens und den Höhen-Aufbau der Endplatten angehen. Zudem kann mit einer zentralen Spanneinheit nicht auf ggf. abweichende Riemen-Dehnraten oder Spannkräfte eingestellt werden. Eine Lösung mit wenigen Riemen und geringer Anzahl mechanischer Bauelemente, welche trotzdem eine Adaption auf Toleranzabweichungen ermöglichen, ohne den Bauraumbedarf des Stapels wesentlich zu erhöhen, könnte von Vorteil sein.

Durch eine Erweiterung des Stack-Gehäuses um und in die Riemenführung gelingt eine Lösung dieser Aufgabe. Gemäß der Erfindung wird diese Aufgabe gemäß eines ersten Aspekts durch eine Brennstoffzellenanordnung nach Anspruch 1 gelöst. Die abhängigen Ansprüche betreffen vorteilhafte Weiterbildungen der Erfindung.

Erfindungsgemäß ist hier vorgesehen, dass seitlich von dem Brennstoffzellenstapel Riemenaufnahmen an den Endplatten angebracht sind, und Riemen über die Riemenaufnahmen so angebracht sind, dass sie den Stapel verspannen.

Eine seitlich vom Stack, z.B. an den Endplatten, angeschlagene Riemenaufnahme erfüllt hier sowohl die Anforderung einer einfachen Montage als auch einer platzsparenden und adaptierbaren Krafteinleitung über Riemen in die Endplatten.

Der Brennstoffzellenstapel weist eine Längsachse in Stapelrichtung auf sowie Seitenflächen, welche durch die Seitenflächen der Brennstoffzellen gebildet sind, und parallel zur Stapelrichtung und Längsachse des Stapels verlaufen. Ein quaderförmiger Brennstoffzellenstapel weist beispielsweise jeweils zwei Paare von zwei sich jeweils gegenüberliegende parallelen Seitenflächen auf, welche orthogonal zueinanderstehen.

Vorzugsweise weist der Stapel an beiden Enden jeweils eine Endplatte auf, an welchen jeweils an zwei gegenüberliegenden Seitenflächen Riemenaufnahmen angebracht sind, welche über die Seitenflächen hervorstehen. Die Riemenaufnahmen stehen sowohl über die Seitenflächen der Endplatten als auch über die durch die Seitenflächen der Brennstoffzellen gebildeten Seitenflächen des Stapels hervor.

Erfindungsgemäß ist diese Riemenaufnahme in der Höhe (d.h. entlang der Stapelrichtung) variabel oder einstellbar an den Endplatten montiert. Dies ermöglicht eine Anpassung der Kraft, mit welcher der Stapel nach der Montage verspannt wird. Die Verspannung kann somit nach erfolgter Montage nachjustiert oder eingestellt werden.

Bei einem montierten Riemen mit einer festen unveränderlichen Länge wird durch eine relative Verschiebung einer Riemenaufnahme gegenüber der Endplatte in Stapelrichtung von der Stapelmitte zum Stapelende hin die Endplatte stärker in Richtung zur Stapelmitte gedrückt. Somit wird eine stärkere Kompressionskraft auf den Stapel ausgeübt. Im Gegenzug kann die Kompressionskraft verringert werden, wenn die Riemenaufnahme relativ gegenüber der Endplatte zur Stapelmitte hin verschoben wird. Ein Verschieben und/oder Fixieren der Relativposition der Riemenaufnahme gegenüber der Endplatte ist beispielsweise durch eine Stellschraube oder einen anderen mechanischen Stellmechanismus möglich. Eine Verspannkraft kann auch durch eine elastische Deformation des Verspannriemens ausgeübt werden.

Ein Riemen als Verspann-Element könnte weiter am Ende der Stack-Fertigung, z.B. nach einer initialen Vorspannung des Stapels, über die Riemenaufnehmer geschoben werden. Diese können anschließend auf die gewünschte Vorspannung eingestellt werden. Nach dem Verspannverfahren ist der Stack fertig.

Bei einer besonders vorteilhaften Ausführungsform des erfindungsgemäßen Brennstoffzellenstapels sind Riemenanordnungen an einer oberen und einer unteren Endplatte des Stapels so angeordnet, dass ein durchgehend in sich geschlossener Verspannriemen aufgesteckt werden kann. Die Kompressionskraft zur Verspannung des Stapels kann dann, wie oben beschrieben, über eine Verschiebung der Riemenaufnahme in Stapelrichtung eingestellt werden.

Vorzugsweise spannt der in sich geschlossene Riemen im montierten Zustand eine gedachte Ebene auf, deren Mittelsenkrechte orthogonal zu einer Seitenfläche des Stapels und zur Längsachse des Stapels verläuft. Die durch den Riemen aufgespannte Ebene ist dabei vorzugsweise parallel zu der Seitenfläche des Stapels. Vorzugsweise ist der Spannriemen so zur Seitenfläche angeordnet, dass seine Mittelsenkrechte die Längsachse des Stapels orthogonal schneidet. Diese Geometrie erlaubt ein einfaches Aufstecken des Verspannriemens von der Seite auf den Stapel.

Die Ausführung kann sowohl mit zwei oder vier als auch mit mehreren Riemenaufnehmern realisiert werden, welche auf der Längs- bzw. Querseite des Stapels angebracht sein können.

Vorzugsweise weist der Brennstoffzellenstapel an mindestens zwei sich gegenüberliegenden Seitenflächen einen solchen Spannriemen auf.

Dafür weisen die Endplatten des Stapels jeweils an zwei sich gegenüberliegenden Seiten jeweils eine Riemenaufnahme auf. Die Riemenaufnahmen erstrecken sich vorteilhaft über einen Großteil der Breite der Seitenfläche. Beispielsweise erstreckt sich die Riemenaufnahme über mindestens 50%, mindestens 60% oder mindestens 70% der Breite der Seitenfläche. Somit wird die durch den Riemen aufgebrachte Kompressionskraft über die Breite des Staples verteilt. Für eine noch bessere Kraftverteilung kann die Riemenaufnahme außerdem eine abgerundete Form, eine ellipsoide Form, oder eine halbrunde Form aufweisen. Der Riemen wird in Querrichtung entlang der Breite der Seitenfläche des Stapels über die Riemenaufnahmen und deren Form geführt.

Ein aufgesteckter Spannriemen wird von einer ersten Riemenaufnahme an einer ersten Endplatte über die Breite der Riemenaufnahme geführt, verläuft über die Länge des Stapels (in Stapelrichtung) zu einer zweiten Riemenaufnahme an einer in Stapelrichtung gegenüberliegenden zweiten Endplatte. Dort wird er über die zweite Riemenaufnahme geführt und führt zurück zur ersten Riemenaufnahme. Durch die breite Formgebung der Riemenaufnahmen erstreckt sich so der Spannriemen über einen Großteil (z.B. mehr als 50%, mehr als 60% oder mehr als 70%) der Seitenfläche des Stapels. In einer seitlichen Draufsicht auf die Seitenfläche des Brennstoffzellenstapels umrahmt der Spannriemen somit einen Großteil (z.B. mehr als 50%, mehr als 60% oder mehr als 70%) der Seitenfläche des Stapels (beispielsweise ringförmig, elliptisch oder mit einer in ovalen Form, je nach Form der Riemenaufnahmen).

Somit kann auch mit nur einen Verspannriemen pro Seitenfläche des Brennstoffzellenstapels eine breite Kraftverteilung über den Stapel gewährleistet werden. Dadurch kann die Anzahl der zu verbauenden Komponenten klein gehalten werden. Eine weitere Reduktion der Anzahl der zu verbauenden Komponenten kann erreicht werden, indem nur an jeder zweiten Seitenfläche des Stapels ein Verspannriemen angeordnet ist. Durch die oben beschrieben Geometrie der Riemenaufnahmen kann trotzdem eine breite Kraftverteilung über den Stapel erreicht werden.

Vorteile der erfinderischen Lösung sind u.A. weniger Einzelkomponenten, die zu einem Brennstoffzellen-Stapel zusammengeführt werden müssen. Entsprechend müssen weniger Toleranzen beachtet werden und Handlingzeiten können reduziert werden. Weiterhin vorteilhaft können eine automatisierte Spanneinrichtungen kombiniert mit einer schnellen und robusten Riemenspannung und Stack-Krafteinbringung sein.

Mit einer Brennstoffzellenanordnung kann durch eine elektrochemische Reaktion die chemische Reaktionsenergie eines kontinuierlich zugeführten Brennstoffes (z. B. Wasserstoff) und eines kontinuierlich zugeführten Oxidationsmittels (z. B. Sauerstoff oder Luft) in elektrische Energie gewandelt werden.

Im Betrieb der über die (elektrisch leitfähigen) Bipolar-Halbplatten in elektrischer Reihenschaltung angeordneten Brennstoffzellen müssen die Reaktanten der elektrochemischen Reaktion, also der Brennstoff (z. B. Wasserstoff) und das Oxidationsmittel (z. B. Luft), auf in Stapelrichtung betrachtet unterschiedlichen Seiten der Membran-Elektroden-Einheit innerhalb jeder Brennstoffzelle zugeführt werden.

Zu diesem Zweck sind die Bipolar-Halbplatten jeder Brennstoffzelle auf ihren der Membran-Elektroden-Einheit zugewandten Seiten jeweils mit einer Kanalstruktur ausgebildet, um den Brennstoff und das Oxidationsmittel auf den jeweiligen Seiten der Membran-Elektroden-Einheit über diese Kanalstrukturen in die dort angrenzende jeweilige Gasdiffusionslage einzubringen und somit über die jeweilige Gasdiffusionslage an die jeweilige Elektrodenschicht auf der entsprechenden Seite der Elektrolytmembran heranzuführen.

Die Elektrodenschichten sind üblicherweise aus einem Kohlenstoffmaterial gebildet und mit einem geeigneten Katalysator beschichtet bzw. durchsetzt. Die brennstoffseitige Elektrodenschicht bildet hierbei eine Anode und die oxidationsmittelseitige Elektrodenschicht eine Kathode der Membran-Elektroden-Einheit.

Das Produkt der in den einzelnen Brennstoffzellen ablaufenden elektrochemischen Reaktion, beispielsweise Wasser, kann über den Oxidationsmittel (z. B. Luft)-führenden Brennstoffzellenbereich abgeführt werden.

In den einzelnen Brennstoffzellen müssen der Brennstoff-führende Bereich, d.h. anodenseitige Kanalstruktur, Gasdiffusionslage, Elektrodenschicht (Anode), und der Oxidationsmittel-führende Bereich, d.h. kathodenseitige Kanalstruktur, Gasdiffusionslage, Elektrodenschicht (Kathode), gegeneinander abgedichtet sein, um einen der Leistungseffizienz abträglichen Gasaustausch zwischen diesen Bereichen zu verhindern.

Dies impliziert insbesondere, dass wenigstens einer der beiden Bereiche gegen die Umgebung der Brennstoffzelle bzw. des Brennstoffzellenstapels (z. B. Atmosphäre) hin abgedichtet sein muss, um einen solchen Austausch über die Umgebung zu unterbinden. In der Praxis wird hierbei zumindest der Brennstoff-führende Bereich gegenüber der Umgebung abgedichtet, um einen Verlust von Brennstoff aus diesem Brennstoffzellenbereich in die Umgebung sowie einen Eintrag eines Mediums (z. B. Luft) aus der Umgebung in diesen Brennstoffzellenbereich hinein zu verhindern.

Insbesondere zur Ausbildung einer luftgekühlten Brennstoffzellenanordnung kann der Oxidationsmittel-führende Bereich auch "offen" zur Umgebung hin ausgestaltet sein. Beispielsweise kann die bei den einzelnen Brennstoffzellen vorgesehene Oxidationsmittel-Kanalstruktur an zwei in einer Querrichtung betrachtet einander entgegengesetzten Seiten der Brennstoffzelle offen sein, um im Betrieb eine Strömung des Oxidationsmittels (z. B. Luft) in dieser Querrichtung durch die Brennstoffzellenanordnung hindurch zu ermöglichen. Hierfür kann das Oxidationsmittel z. B. mit einem Gebläse durch die seitlich offene Brennstoffzellenanordnung hindurchgetrieben werden und hierbei zugleich für eine Kühlung sorgen.

In vielen Fällen ist es jedoch vorteilhafter, wenn sowohl der Brennstoff-führende Bereich als auch der Oxidationsmittel-führende Bereich des Brennstoffzellenstapels gegeneinander und zur Umgebung hin abgedichtet sind.

Für derartige Abdichtungen üblich sind z. B. separat gefertigte und zwischen Bipolarplatte und Membran-Elektroden-Einheit eingelegte Dichtungen, oder z. B. ein Dispensen/Aufspritzen von Dichtungsmaterial an jeweiligen Komponenten der Brennstoffzellen (z. B. Bipolarplatte, Membran-Elektroden-Einheit) während eines Montageprozesses, oder eine Vorfertigung von Komponenten der Brennstoffzellen mit bereits daran angeformten Dichtungen.

In einiger Ausführungsformen sind die Brennstoffzellen der Brennstoffzellenanordnung für einen Betrieb mit Wasserstoff als Brennstoff geeignet ausgebildet, z. B. mit einer als Protonenleitmembran ausgebildeten Elektrolytmembran.

Alternativ kommt jedoch auch z. B. eine Ausbildung der Brennstoffzellenanordnung für einen Betrieb mit einem anderen Brennstoff wie z. B. einer organischen Verbindung (z. B. Methan oder Methanol) oder z. B. Erdgas in Betracht.

In einer Ausführungsform ist die Brennstoffzellenanordnung für einen Betrieb mit Luft als Oxidationsmittel geeignet ausgebildet.

In einer Ausführungsform sind die Bipolar-Halbplatten aus einem metallischen Material gebildet. Alternativ können die Bipolar-Halbplatten insbesondere z. B. aus einem Kohlenstoffmaterial oder z. B. aus einem elektrisch leitenden Kunststoffmaterial (z. B. entsprechend dotiert, z. B. mit Ruß) gebildet sein, oder aus einem anderen elektrisch leitfähigen Material.

Gemäß einer Ausführungsform werden die bei der Erfindung vorgesehenen Bipolar-Halbplatten jeweils separat voneinander vorgefertigt und bei der Herstellung der Brennstoffzellenanordnung durch ein Stapeln der einzelnen Komponenten entsprechend in den Stapel eingefügt.

Gemäß einem weiteren Aspekt betrifft die Erfindung ein Verfahren zur Herstellung einer Brennstoffzellenanordnung

Die Erfindung wird nachfolgend anhand von Ausführungsbeispielen mit Bezug auf die beigefügten Zeichnungen weiter beschrieben. Es stellen jeweils schematisch dar:
- Fig. 1: eine Schnittansicht einer Brennstoffzelle gemäß eines Ausführungsbeispiels nach dem Stand der Technik,
- Fig. 2: eine auf Zahn- oder Keilriemen basierende Verspannungen,
- Fig. 3: eine erste Ausführung einer seitlich vom Stack an den Endplatten angeschlagene Riemenaufnahme,
- Fig. 4: eine zweite Ausführung einer seitlich vom Stack an den Endplatten angeschlagene Riemenaufnahme, und.
- Fig. 5: die Ausführungsform von Figur 3 zur Verdeutlichung der Geometrie.

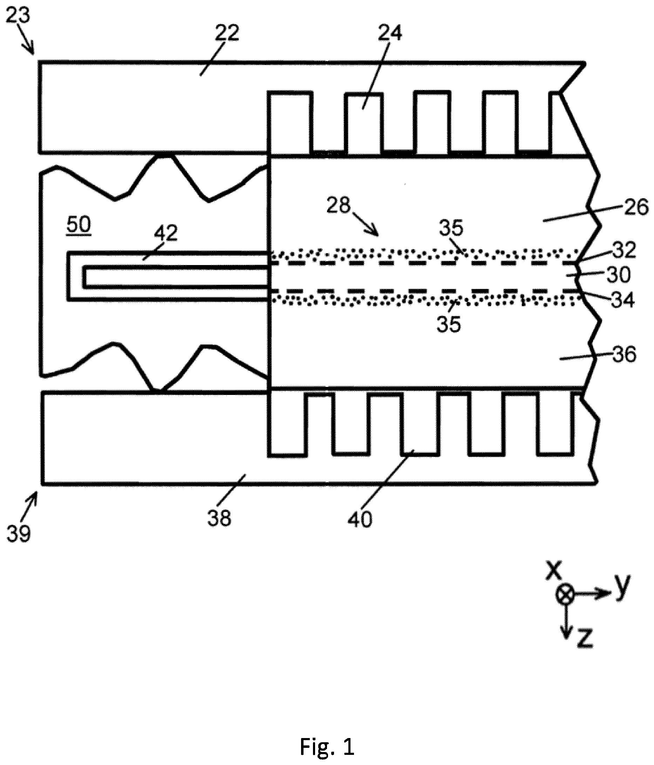

Fig. 1 zeigt eine Brennstoffzelle 20 mit einem herkömmlichen Aufbau, mittels welcher die chemischen Reaktionsenergie eines zugeführten Brennstoffes (z. B. Wasserstoff) und eines zugeführten Oxidationsmittels (z. B. Luft) in elektrische Energie gewandelt werden kann.

Die Brennstoffzelle 20 ist plattenförmig formgestaltet und erstreckt sich in einer Plattenebene dieser Formgestaltung in einer ersten Querrichtung x und einer dazu orthogonalen zweiten Querrichtung y (z. B. mit rechteckiger Kontur).

Die Richtung orthogonal zu der von den Querrichtungen x, y aufgespannten Plattenebene wird als Stapelrichtung z bezeichnet, da in der Praxis zumeist aus einer Vielzahl derartiger in Stapelrichtung z gestapelt angeordneter Brennstoffzellen 20 eine Brennstoffzellenanordnung ("Brennstoffzellenstapel") gebildet wird. An den beiden Enden in der Stapelrichtung z befinden sich Endplatten. Die Endplatten dienen zur Stabilität des Stapels, und sind in der Regel mechanisch stabiler als die Bipolarplatten in der Mitte des Staples. Somit können die Endplatten ein Druck auf den Stack oder Brennstoffzellenstapel ausüben.

Die Endplatten können aus dem gleichen Material wie die Bipolarplatten bestehen, oder aber sie können aus einem anderen Material bestehen.

Die Brennstoffzelle 20 ist jeweils aus einer Mehrzahl von plattenförmig formgestalteten und in Stapelrichtung z gestapelt angeordneten Komponenten zusammengesetzt, mit plattenförmigen Endplatten an den jeweiligen Enden des Stapels.

Es handelt sich dabei zunächst um eine anodenseitige Bipolar-Halbplatte 22, an deren Innenseite (d.h. der dem Inneren der Brennstoffzelle 20 zugewandten Seite) eine Kanalstruktur 24 zur Führung des Brennstoffes ausgebildet ist, die nachfolgend auch als Brennstoff-Kanalstruktur 24 bezeichnet wird.

Über die aus elektrisch leitfähigem Material (z. B. Metall) hergestellte Bipolar-Halbplatte 22 wird im Betrieb der Brennstoffzelle 20 erzeugter elektrischer Strom abgeführt.

An der Innenseite der Bipolar-Halbplatte 22 und somit an der Brennstoff-Kanalstruktur 24 angrenzend ist eine elektrisch leitfähige und für den Brennstoff durchlässige Gasdiffusionslage 26 (z. B. Kohlenstoff-Vlies) vorgesehen, über welche der Brennstoff im Betrieb der Brennstoffzelle 20 zu einer in Stapelrichtung z daran angrenzenden Membran-Elektroden-Einheit 28 gelangt.

Die Membran-Elektroden-Einheit 28 umfasst eine elektrisch nicht leitfähige (im Falle von Wasserstoff als Brennstoff protonenleitende) Elektrolytmembran 30 und in Stapelrichtung z betrachtet beiderseits davon angeordnete elektrisch leitfähige und mit einem Katalysator 35 (z. B. Platin oder Palladium) durchsetzte Elektrodenschichten 32 und 34 (z. B. aus Metall). Die Elektrodenschicht 32 bildet hierbei die Anode und die Elektrodenschicht 34 die Kathode für eine elektrochemische Reaktion des Brennstoffes mit dem Oxidationsmittel.

Im Betrieb der Brennstoffzelle 20 wird der Brennstoff (z. B. Wasserstoff) ausgehend von der Brennstoff-Kanalstruktur 24 über die anodenseitige Gasdiffusionslage 26 an die Elektrodenschicht 32 (Anode) herangeführt, und das Oxidationsmittel (Luft) wird über eine an die Elektrodenschicht 34 (Kathode) angrenzende kathodenseitige Gasdiffusionslage 36 an die Elektrodenschicht 34 herangeführt.

In Stapelrichtung z an diese elektrisch leitfähige, für das Oxidationsmittel durchlässige Gasdiffusionslage 36 angrenzend ist eine elektrisch leitfähige kathodenseitige Bipolar-Halbplatte 38 vorgesehen, an deren Innenseite eine Kanalstruktur 40 zur Führung des Oxidationsmittels ausgebildet ist, nachfolgend auch als Oxidationsmittel-Kanalstruktur 40 bezeichnet.

Das Produkt der elektrochemischen Reaktion, beispielsweise Wasser, kann über den Oxidationsmittel (z. B. Luft)-führenden Brennstoffzellenbereich abgeführt werden, welcher hier z. B. die Oxidationsmittel-Kanalstruktur 40 der Bipolar-Halbplatte 38 beinhaltet. Die Bipolar-Halbplatte 38 dient im Betrieb der Brennstoffzelle 20 kathodenseitig außerdem zur Abfuhr des von der Brennstoffzelle 20 erzeugten elektrischen Stroms.

In der Brennstoffzelle 20 müssen der Brennstoff-führende Bereich, d.h. Brennstoff-Kanalstruktur 24, Gasdiffusionslage 26, Elektrodenschicht 32 (Anode), und der Oxidationsmittel-führende Bereich, d.h. Oxidationsmittel-Kanalstruktur 40, Gasdiffusionslage 36, Elektrodenschicht 34 (Kathode), gegeneinander abgedichtet sein, um einen der Leistungseffizienz abträglichen Gasaustausch zwischen diesen Bereichen zu verhindern.

Zu diesem Zweck weist die Brennstoffzelle 20 an ihrem seitlichen Randbereich eine Dichtung 50 auf, die an der Bipolar-Halbplatte 22, der Bipolar-Halbplatte 38 und der Membran-Elektroden-Einheit 28 anliegt, um von der Bipolar-Halbplatte 22 zur Membran-Elektroden-Einheit 28 hin und von der Membran-Elektroden-Einheit 28 zur Bipolar-Halbplatte 38 hin abzudichten. Die Dichtung 50 schließt in seitlicher Richtung (Querrichtung y in Fig. 1) bündig mit seitlichen Rändern 23, 39 der Bipolar-Halbplatten 22, 38 ab.

Die vorliegende Erfindung zielt darauf ab, bei einer Brennstoffzelle wie z. B. der in Fig. 1 dargestellten, bzw. bei einer aus derartigen Brennstoffzellen gebildeten Brennstoffzellenanordnung einen neuartigen Weg aufzuzeigen, mit dem Abdichtungen zur gewünschten Führung von Brennstoff und/oder Oxidationsmittel und/oder gegebenenfalls in einem Raum zwischen zwei benachbarten Brennstoffzellen vorgesehenem Kühlmedium realisiert werden können.

Brennstoffzellen-Stapel werden typisch mittels Spannbolzen oder Schrauben, und ggf. Federelementen, mechanisch verspannt. Zudem gibt es Lösungen, die ein meist metallisches Band um den Stapel führen, welches dann an 1 oder 2 Befestigungspunkten an den Endplatten des Stapels befestigt und vorgespannt wird.

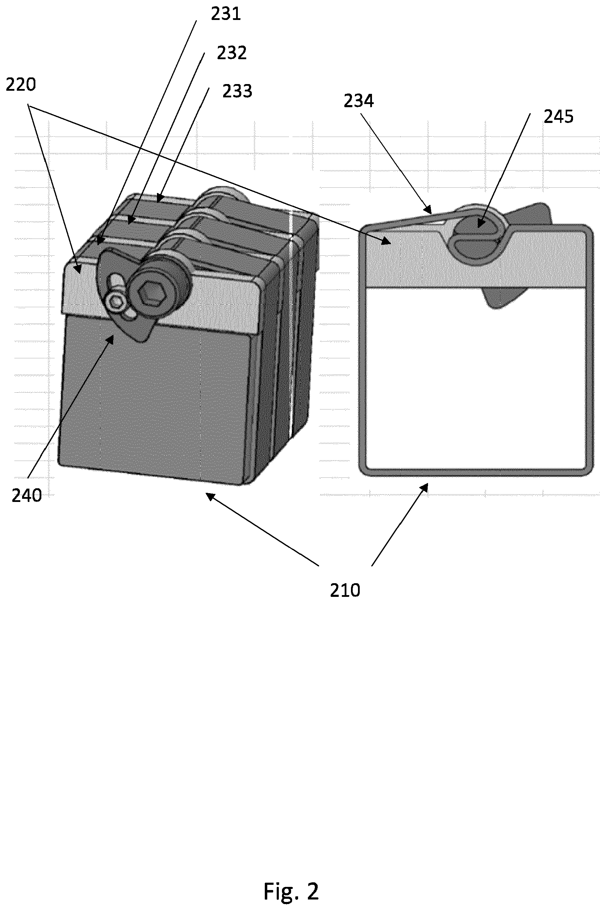

Eine weitere Lösung ist in Figur 2 abgebildet, wo eine auf Zahn- oder Keilriemen basierende Verspannungen auf mehrere Riemen samt mehrerer Verspann-Einheiten basiert. Der Brennstoffzellen-Stapel oder Stack 210 wird mit Riemen 231, 232, 233, 234 verspannt. Die Riemen laufen über eine Endplatte 220, wo ein Verspannungsregler 240, 245 die Reglung der Spannung ermöglicht.

Jedoch kann die Vielzahl an Spann-Stellen, und die Vielzahl von Schrauben und sonstige beweglichen Bauteilen, die zur Einstellung der Vorhaltekraft benötigt werden, von Nachteil sein. Zusätzlich werden öfters Federelementen oder Spannbändern benötigt, um Druck anzupassen oder auszugleichen.

Es ist vorteilhaft für eine Massenproduktion sowie für die Eingliederung in eine schnelle und produktive Fertigungsanlage, entsprechend schnelle Verspann-Prozesse anwenden zu können. Ebenso soll die Zahl der Einzelteile, die zur Fertigung und zur Verspannung benötigt werden, möglichst geringgehalten werden.

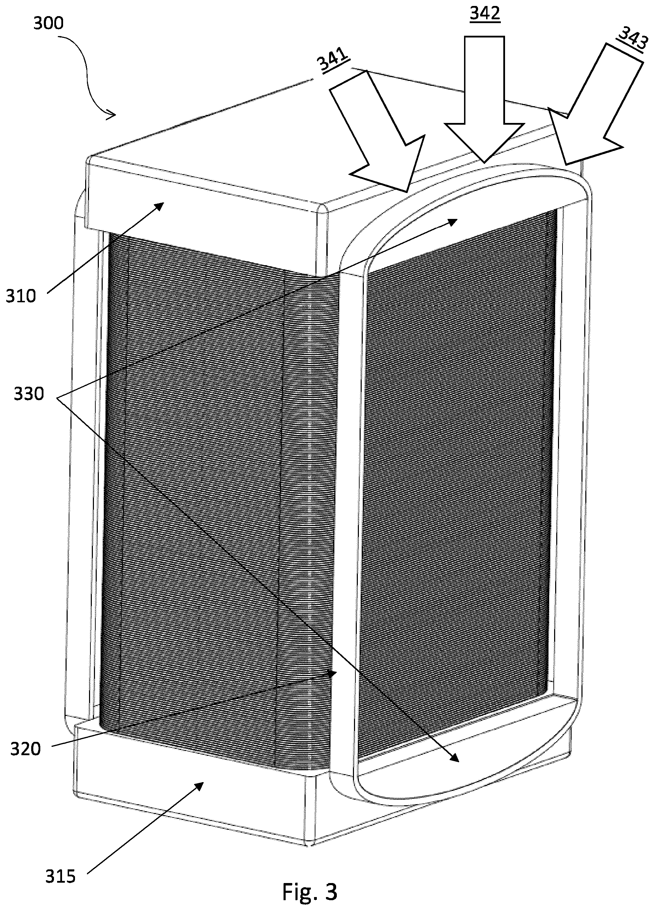

Figur 3 veranschaulicht eine erste Ausführung einer seitlich vom Stack 300 an den Endplatten 310, 315 angeschlagene Riemenaufnahme 330. Ersichtlich ist ein Riemen und seinen Riemenaufnahmen; insgesamt verspannen zwei Riemen den Stapel. Die Riemenaufnahme ist in der Höhe variabel an den Endplatten montiert. Verschiedene Einstellmöglichkeiten können Anwendung finden. Ein Riemen 320 als Verspann-Element kann am Ende der Stack-Fertigung über die Riemenaufnehmer angebracht werden. Je nach Montagekonzept wird der Riemen nach einer initialen Vorspannung des Stapels montiert.

Die Riemen werden ggf. anschließend auf eine gewünschte Vorspannung eingestellt und somit ist der Stack fertig gespannt.

Der Riemen 320 übt Druck auf die Riemenaufnahme 330 aus. Verschiedene Druckwirkungen werden als Pfeilen 341 342 343 dargestellt. Je nach mechanischen Anforderungen und Platzbedarf an die Stapel- und Endplattenqeometrie kann die Riemenaufnahme angepasst werden. Damit kann auch die Druckwirkung angepasst werden. In verschiedene Ausführung der Erfindung kann die Riemenaufnahme eine abgerundete Form haben, oder eine ellipsoide Form, oder eine halbrunde Form. Die zwei Riemenaufnahmen aus der Ausführung der Figur 3 können beide die gleiche Form haben, oder unterschiedliche Formen.

Die Endplatten müssen für den ausgeübten Druck ausgestaltet sein. Sie können z.B. aus Metall, z.B. Stahl, geformt werden oder bestehen, wobei dieses elektrisch leitend ist, und somit eine elektrische Isolationslage zwischen den Endplatten und den aktiven Zellen existieren muss. Die Endplatten können auch aus einem elektrisch nichtleitenden Material bestehen, wie z.B. Polymerverbindungen. Jedoch müssen die benötigten mechanische Eigenschaften gewährleistet werden.

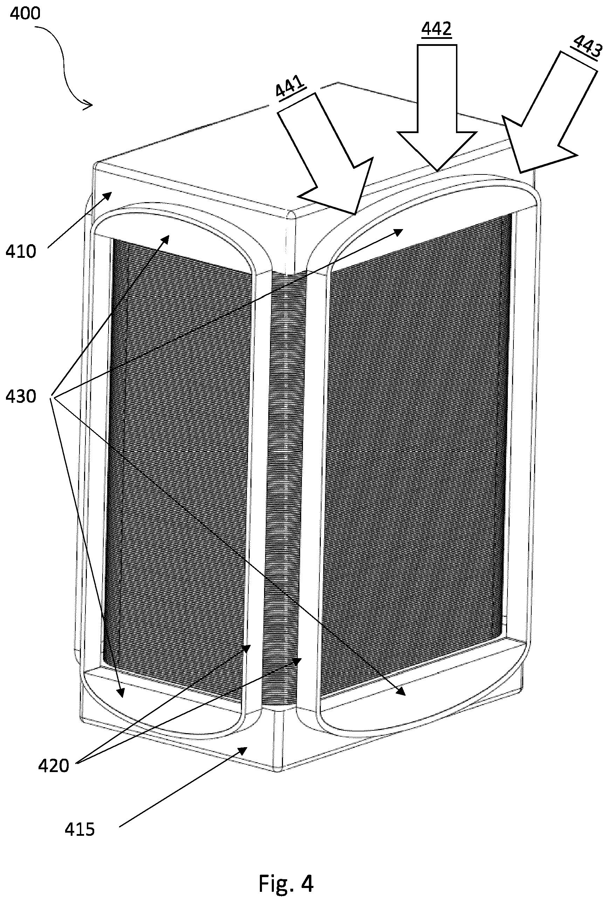

Figur 4 zeigt eine zweite Ausführung einer seitlich vom Stack 400 an den Endplatten 410, 415 angeschlagenen Riemenaufnahmen 430. Ersichtlich sind zwei von vier Riemen oder zwei Riemen-Paar die den Stapel verspannen. Die Riemenaufnahmen werden anpassbar mit Einstellmöglichkeit an den Endplatten montiert. Ein Riemen 420 als Verspann-Element kann am Ende der Stack-Fertigung über die Riemenaufnehmer angebracht werden. Je nach Montagekonzept wird der Riemen nach einer initialen Vorspannung des Stapels montiert. Wie bei Figur 3 werden die Riemen ggf. anschließend auf eine gewünschte Vorspannung eingestellt und somit der Stack fertig gespannt.

Die beiden Riemen-Paare können je nach Aufbau und Bedarf unterschiedliche Längen oder Geometrien haben, also die beiden Riemen seitlich und diejenigen orthogonal dazu unterschiedliche Eigenschaften besitzen. Die Riemen-Paare können unterschiedliche mechanische Eigenschaften haben. So können sie unterschiedlich lang sein, unterschiedlich dick oder breit oder stark, mit unterschiedliche Dehnraten, etc. Auch die Aufnahmen können unterschiedlich ausgestaltet werden. Einzelne Riemen können unterschiedliche mechanische Eigenschaften haben, und/oder unterschiedliche Längen oder Geometrien haben. Es kann auch Unterschiede bei der Verspann-Prozess zwischen Riemen-Paare oder einzelne Riemen geben. Somit wird z.B. ein erstes Riemen-Paar aufgeschoben, ein zweites Riemen-Paar aufgeschoben, ggf. mit unterschiedliche Vorspannungen an den Spannelementen einstellen, und so wird der Brennstoffzellenstapel aufgebaut.

Der Riemen 420 übt Druck auf die Riemenaufnahmen 430 aus. Verschiedene Druckwirkungen werden als Pfeilen 441 442 443 dargestellt. Je nach mechanischen Anforderungen und Platzbedarf an die Stapel- und Endplattenqeometrie kann die Riemenaufnahme angepasst werden und damit auch die Druckwirkung. In verschiedene Ausführung der Erfindung kann die Riemenaufnahme eine abgerundete Form haben, oder eine ellipsoide Form, oder eine halbrunde Form. Die acht Riemenaufnahmen aus der Ausführung der Figur 4 können alle die gleiche Form haben, oder unterschiedliche Formen.

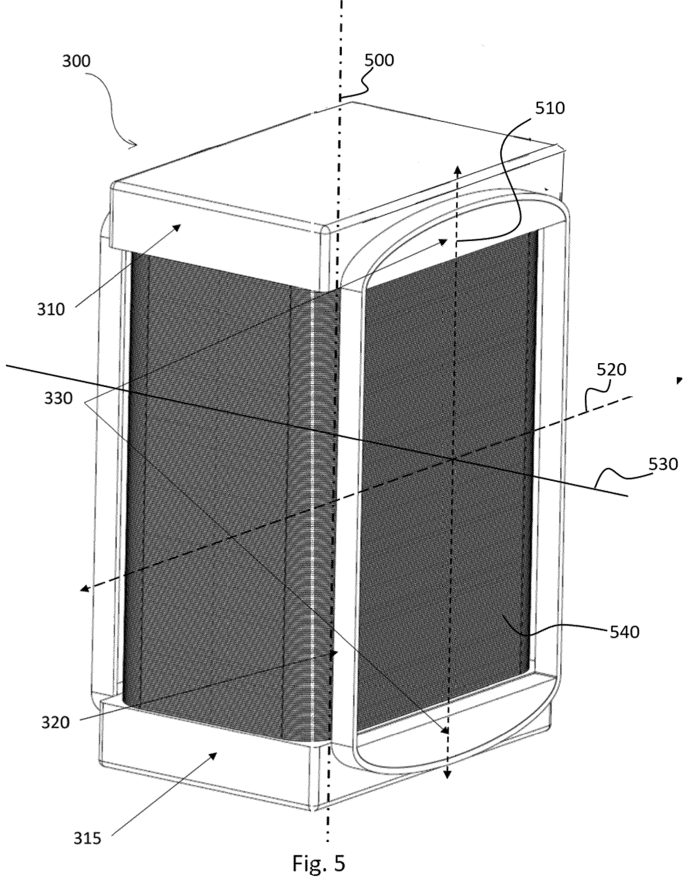

In Figur 5 ist die Ausführungsform von Figur 3 nochmals zur Verdeutlichung der Geometrie dargestellt. Eine Längsachse 500 erstreckt sich mittig in Stapelrichtung durch den Brennstoffzellenstapel 300. Durch den Spannriemen 320 wird eine Ebene aufgespannt, dargestellt durch die Achsen 510 und 520. Die Mittelsenkrechte 530 des Spannriemens 320 steht senkrecht zur durch die Achsen 510 und 520 aufgespannten Ebene und zur Längsachse 500 des Stapels. Die durch die Achsen 510 und 520 (und durch den Spannriemen) aufgespannte Ebene verläuft parallel zur Seitenfläche 540 des Stapels.

## Patentansprüche

1. Brennstoffzellenstapel (10, 300, 400), aufweisend in einer Stapelrichtung (z) gestapelt angeordnete Brennstoffzellen (20), die jeweils plattenförmig ausgebildet sind und sich orthogonal zur Stapelrichtung (z) betrachtet jeweils in einer ersten Querrichtung (x) und einer dazu orthogonalen zweiten Querrichtung (y) erstrecken,
wobei die Brennstoffzellen (20) jeweils in der Stapelrichtung (z) gestapelt aufweisen:
- eine anodenseitige Bipolar-Halbplatte (22) mit einer Brennstoff-Kanalstruktur (24) zur Führung eines Brennstoffes,
- eine anodenseitige Gasdiffusionslage (26),
- eine Membran-Elektroden-Einheit (28), aufweisend eine Elektrolytmembran (30) und in Stapelrichtung (z) beiderseits davon angeordnete Elektrodenschichten (32, 34), die eine Anode (32) und eine Kathode (34) für eine elektrochemische Reaktion des Brennstoffes mit einem Oxidationsmittel ausbilden,
- eine kathodenseitige Gasdiffusionslage (36),
- eine kathodenseitige Bipolar-Halbplatte (38) mit einer Oxidationsmittel-Kanalstruktur (40) zur Führung des Oxidationsmittels,
- und Endplatten an den beiden Enden des Stapels in der Stapelrichtung z,
wobei seitlich von dem Stapel Riemenaufnahmen (330, 430) an den Endplatten (310, 315, 410, 415) angebracht sind, und Riemen (320, 420) über die Riemenaufnahmen so angebracht sind, dass sie den Stapel verspannen,
**dadurch gekennzeichnet, dass** mindestens eine Riemenaufnahme in Stapelrichtung (z) verschiebbar angeordnet ist.

2. Brennstoffzellenstapel (10, 300, 400) nach Anspruch 1, wobei die Riemenaufnahme eine abgerundete Form haben, oder eine ellipsoide Form, oder eine halbrunde Form.

3. Brennstoffzellenstapel (10, 300, 400) nach einem der vorangehenden Ansprüche, wobei der Riemen (320, 420) so über einen Riemenaufnahme an einer ersten Endplatte und über eine Riemenaufnahme an einer zweiten Endplatte geführt ist, dass der Riemen in einer seitlichen Draufsicht auf eine Seitenfläche des Brennstoffzellenstapels einen Großteil, insbesondere mehr als 50%, mehr als 60% oder mehr als 70% der Seitenfläche des Stapels umrahmt.

4. Brennstoffzellenstapel (10, 300, 400) nach einem der vorangehenden Ansprüche, wobei die Riemenaufnahmen alle die gleiche Form haben.

5. Brennstoffzellenstapel (10, 300, 400) nach Anspruch 1, wobei die Riemenaufnahmen (320, 420) unterschiedliche Formen haben.

6. Brennstoffzellenstapel (10, 300, 400) nach einem der vorangehenden Ansprüche, wobei die Endplatten (310, 315, 410, 415) aus dem gleichen Material wie die Bipolarplatten (22, 38) bestehen.

7. Brennstoffzellenstapel (10, 300, 400) nach einem der Ansprüche 1 bis 5, wobei die Endplatten (310, 315, 410, 415) aus einem elektrisch nichtleitfähigem Material bestehen.

8. Brennstoffzellenstapel (10, 400) nach einem der vorangehenden Ansprüche, wobei mehrere Riemen-Paare angebracht sind und die Riemen paarweise unterschiedliche Eigenschaften besitzen.

9. Verfahren zur Herstellung einer Brennstoffzellenstapel (10, 300, 400) nach einem der vorangehenden Ansprüche, aufweisend
- Bilden einer Brennstoffzellenanordnung (10) durch stapelndes Anordnen von Brennstoffzellen (20) in einer Stapelrichtung (z), die jeweils plattenförmig ausgebildet sind und sich orthogonal zur Stapelrichtung (z) betrachtet jeweils in einer ersten Querrichtung (x) und einer dazu orthogonalen zweiten Querrichtung (y) erstrecken, wobei die Brennstoffzellen (20) jeweils in der Stapelrichtung (z) gestapelt aufweisen: eine anodenseitige Bipolar-Halbplatte (22) mit einer Brennstoff-Kanalstruktur (24) zur Führung eines Brennstoffes; eine anodenseitige Gasdiffusionslage (26); eine Membran-Elektroden-Einheit (28), aufweisend eine Elektrolytmembran (30) und in Stapelrichtung (z) beiderseits davon angeordnete Elektrodenschichten (32, 34), die eine Anode (32) und eine Kathode (34) für eine elektrochemische Reaktion des Brennstoffes mit einem Oxidationsmittel ausbilden; eine kathodenseitige Gasdiffusionslage (36); eine kathodenseitige Bipolar-Halbplatte (38) mit einer Oxidationsmittel-Kanalstruktur (40) zur Führung des Oxidationsmittels; und Endplatten an den beiden Enden des Stapels in der Stapelrichtung z, und
- anbringen von Riemenaufnahmen (330, 430) seitlich an den Endplatten (310, 315, 410, 415) von dem Stapel,
wobei Riemen (320, 420) über die Riemenaufnahmen so angebracht werden, dass sie den Stapel verspannen,
**gekennzeichnet durch**
- ein Verschieben und Fixieren der Relativposition mindestens einer Riemenaufnahme gegenüber der Endplatte.

10. Verfahren zur Herstellung einer Brennstoffzellenstapel (10, 300, 400) nach Anspruch 9, wobei der oder die Riemen nach einer initialen Vorspannung des Stapels montiert werden.

## Claims

1. A fuel cell stack (10, 300, 400), having fuel cells (20) which are arranged in a stacked configuration in a stacking direction (z), each of which is plate-shaped and, as viewed orthogonally to the stacking direction (z), extends in a first transverse direction (x) and a second transverse direction (y) orthogonal thereto,
wherein the fuel cells (20) each have, stacked in the stacking direction (z):
- an anode-side bipolar half-plate (22) with a fuel channel structure (24) for conducting a fuel,
- an anode-side gas diffusion layer (26),
- a membrane electrode unit (28), having an electrolyte membrane (30) and electrode layers (32, 34) arranged on both sides thereof in the stacking direction (z), which form an anode (32) and a cathode (34) for an electrochemical reaction of the fuel with an oxidizing agent,
- a cathode-side gas diffusion layer (36),
- a cathode-side bipolar half-plate (38) with an oxidizing agent channel structure (40) for conducting the oxidizing agent,
- and end plates at both ends of the stack in the stacking direction (z),
wherein belt mounts (330, 430) are attached on the end plates (310, 315, 410, 415) laterally of the stack, and belts (320, 420) are attached via the belt mounts in such a way that they brace the stack, **characterized in that** at least one belt mount is arranged so as to be displaceable in the stacking direction (z).

2. The fuel cell stack (10, 300, 400) according to claim 1, wherein the belt mount has a rounded shape, or an ellipsoidal shape, or a semicircular shape.

3. The fuel cell stack (10, 300, 400) according to any one of the preceding claims, wherein the belt (320, 420) is guided via a belt mount on a first end plate and via a belt mount on a second end plate in such a way that the belt surrounds a large part, in particular more than 50 %, more than 60 % or more than 70 % of the lateral surface of the stack in a lateral plan view of a lateral surface of the fuel cell stack.

4. The fuel cell stack (10, 300, 400) according to any one of the preceding claims, wherein the belt mounts all have the same shape.

5. The fuel cell stack (10, 300, 400) according to claim 1, wherein the belt mounts (320, 420) have different shapes.

6. The fuel cell stack (10, 300, 400) according to any one of the preceding claims, wherein the end plates (310, 315, 410, 415) are made of the same material as the bipolar plates (22, 38).

7. The fuel cell stack (10, 300, 400) according to any one of claims 1 to 5, wherein the end plates (310, 315, 410, 415) are made of an electrically non-conductive material.

8. The fuel cell stack (10, 400) according to any one of the preceding claims, wherein a plurality of pairs of belts are attached and the belts of each pair have different properties from one another.

9. A method for producing a fuel cell stack (10, 300, 400) according to any one of the preceding claims, comprising
- forming a fuel cell assembly (10) by arranging fuel cells (20) in a stacked configuration in a stacking direction (z), each of which is plate-shaped design and, as viewed orthogonally to the stacking direction (z), extends in a first transverse direction (x) and a second transverse direction (y) orthogonal thereto, wherein the fuel cells (20) each have, stacked in the stacking direction (z): an anode-side bipolar half-plate (22) with a fuel channel structure (24) for conducting a fuel; an anode-side gas diffusion layer (26); a membrane electrode unit (28), having an electrolyte membrane (30) and electrode layers (32, 34) arranged on both sides thereof in the stacking direction (z), which form an anode (32) and a cathode (34) for an electrochemical reaction of the fuel with an oxidizing agent; a cathode-side gas diffusion layer (36); a cathode-side bipolar half-plate (38) with an oxidizing agent channel structure (40) for conducting the oxidizing agent; and end plates at both ends of the stack in the stacking direction (z), and
- attaching belt mounts (330, 430) to the sides of the end plates (310, 315, 410, 415) of the stack,
wherein belts (320, 420) are attached via the belt mounts in such a way that they brace the stack, **characterized by**
- a displacing and fixing of the relative position of at least one belt mount in relation to the end plate.

10. The method for producing a fuel cell stack (10, 300, 400) according to claim 9, wherein the belt or belts are mounted after an initial pre-tensioning of the stack.

## Revendications

1. Empilement de piles à combustible (10, 300, 400), présentant des piles à combustible (20) agencées empilées dans une direction d'empilement (z), qui sont respectivement réalisées en forme de plaque et qui, vues orthogonalement à la direction d'empilement (z), s'étendent respectivement dans une première direction transversale (x) et dans une seconde direction transversale (y) orthogonale à celle-ci,
dans lequel les piles à combustible (20) présentent respectivement empilées dans la direction d'empilement (z) :
- une demi-plaque bipolaire (22) côté anode comportant une structure de canal de combustible (24) pour le guidage d'un combustible,
- une couche de diffusion de gaz (26) côté anode,
- une unité d'électrode à membrane (28) présentant une membrane électrolytique (30) et des couches d'électrodes (32, 34) agencées de part et d'autre de celle-ci dans la direction d'empilement (z), qui forment une anode (32) et une cathode (34) pour une réaction électrochimique du combustible avec un agent oxydant,
- une couche de diffusion de gaz (36) côté cathode,
- une demi-plaque bipolaire (38) côté cathode comportant une structure de canal d'agent oxydant (40) pour le guidage de l'agent oxydant,
- et des plaques d'extrémité aux deux extrémités de l'empilement dans la direction d'empilement (z),
dans lequel des réceptacles de courroie (330, 430) sont placés latéralement à l'empilement sur les plaques d'extrémité (310, 315, 410, 415), et des courroies (320, 420) sont placées sur les réceptacles de courroie de manière à contraindre l'empilement, **caractérisé en ce qu'**au moins un réceptacle de courroie est agencé de manière déplaçable dans la direction d'empilement (z).

2. Empilement de piles à combustible (10, 300, 400) selon la revendication 1, dans lequel le réceptacle de courroie a une forme arrondie, ou une forme ellipsoïdale, ou une forme semi-circulaire.

3. Empilement de piles à combustible (10, 300, 400) selon l'une quelconque des revendications précédentes, dans lequel la courroie (320, 420) est guidée sur un réceptacle de courroie sur une première plaque d'extrémité et sur un réceptacle de courroie sur une seconde plaque d'extrémité de telle sorte que la courroie, dans une vue en plan latéral d'une surface latérale de l'empilement de piles à combustible, encadre une grande partie, en particulier plus de 50 %, plus de 60 % ou plus de 70 % de la surface latérale de l'empilement.

4. Empilement de piles à combustible (10, 300, 400) selon l'une quelconque des revendications précédentes, dans lequel les réceptacles de courroie ont tous la même forme.

5. Empilement de piles à combustible (10, 300, 400) selon la revendication 1, dans lequel les réceptacles de courroie (320, 420) ont des formes différentes.

6. Empilement de piles à combustible (10, 300, 400) selon l'une quelconque des revendications précédentes, dans lequel les plaques d'extrémité (310, 315, 410, 415) sont constituées du même matériau que les plaques bipolaires (22, 38).

7. Empilement de piles à combustible (10, 300, 400) selon l'une des revendications 1 à 5, dans lequel les plaques d'extrémité (310, 315, 410, 415) sont constituées d'un matériau électriquement non conducteur.

8. Empilement de piles à combustible (10, 400) selon l'une quelconque des revendications précédentes, dans lequel plusieurs paires de courroies sont placées et les courroies possèdent des propriétés différentes par paires.

9. Procédé de fabrication d'un empilement de piles à combustible (10, 300, 400) selon l'une quelconque des revendications précédentes, présentant
- la formation d'un agencement de piles à combustible (10) par agencement empilé de piles à combustible (20) dans une direction d'empilement (z), qui sont réalisées respectivement en forme de plaque et qui, vues orthogonalement à la direction d'empilement (z), s'étendent respectivement dans une première direction transversale (x) et dans une seconde direction transversale (y) orthogonale à celle-ci, dans lequel les piles à combustible (20) présentent respectivement, empilées dans la direction d'empilement (z) : une demi-plaque bipolaire (22) côté anode comportant une structure de canal de combustible (24) pour le guidage d'un combustible ; une couche de diffusion de gaz (26) côté anode ; une unité d'électrode à membrane (28) présentant une membrane électrolytique (30) et des couches d'électrode (32, 34) agencées de chaque côté de celle-ci dans la direction d'empilement (z), lesquelles couches d'électrodes forment une anode (32) et une cathode (34) pour une réaction électrochimique du combustible avec un agent oxydant ; une couche de diffusion de gaz (36) côté cathode ; une demi-plaque bipolaire (38) côté cathode comportant une structure de canal d'agent oxydant (40) pour le guidage de l'agent oxydant ; et des plaques d'extrémité aux deux extrémités de l'empilement dans la direction d'empilement (z), et
- le placement de réceptacles de courroie (330, 430) latéralement à l'empilement sur les plaques d'extrémité (310, 315, 410, 415),
dans lequel des courroies (320, 420) sont placées sur les réceptacles de courroie de manière à contraindre l'empilement, **caractérisé par**
- un déplacement et une fixation de la position relative d'au moins un réceptacle de courroie par rapport à la plaque d'extrémité.

10. Procédé de fabrication d'un empilement de piles à combustible (10, 300, 400) selon la revendication 9, dans lequel la ou les courroies sont montées après une pré-contrainte initiale de l'empilement.
